# EUROPEAN PATENT APPLICATION

(11) **EP 2 554 614 A1**
(43) Date of publication of application: **06.02.2013**
(21) Application number: 11762527.7
(22) Date of filing: 10.03.2011
(51) Int. Cl.: C09J 7/02, B32B 27/30, B32B 27/32, C09J 109/06, C09J 123/08

(54) **SURFACE PROTECTION FILM**

(30) Priority: 31.03.2010 JP 2010080447
(71) Applicant: Toray Advanced Film Co., Ltd., Chuo-ku Tokyo 103-0021 (JP)
(72) Inventor: NAGAE, Yoshikazu, Takatsuki-shi Osaka 569-0807 (JP); SATOU, Junya, Takatsuki-shi Osaka 569-0807 (JP); IMAI, Shiro, Takatsuki-shi Osaka 569-0807 (JP)
(74) Representative: Kador & Partner
(86) International application number: PCT/JP2011/055625
(87) International publication number: WO 2011/122287

(57) **Abstract**

The present invention provides a surface protection film that has moderate adhesive properties for bonding to adherend bodies with a rough surface, has a rear surface with good slipping properties, and also has blocking resistance and good unwinding properties. The surface protection film according to the present invention has a laminated structure formed at least of an adhesive layer and a back layer, wherein the adhesive layer is formed mainly of a styrene-based elastomer while the back layer is formed mainly of a propylene-based resin containing 0.5 wt% to 10 wt% of a fluorine-containing compound having a polyfluorohydrocarbon group and a polyoxy ethylene group, the back layer having a surface roughness of 3 µm or more in terms of ten-point average roughness (Rz), an initial adhesion strength of 1 N/25 mm or more to a #320 hair-line-finished SUS 304 plate, and an unwinding force of 0.5 N/25 mm or less for winding off a film wound up in a roll.

## Description

### Technical field

The invention relates to a surface protection film to be used to prevent adherend surfaces from suffering from dirt and flaws. More specifically, the invention relates to a surface protection film that has moderate adhesive properties for adherend bodies with a rough surface, such as prism sheets and diffusion plates/films used particularly in the optical field and also has blocking resistance and high handleability such as smooth unwinding, as well as rear surfaces with good slipping properties.

### Background art

Surface protection films have been used to prevent synthetic resin plates, metal plates, coated steel plates, various faceplates, and the like from suffering from dirt and flaws during their processing and conveyance.

In particular, thin display panels such as liquid crystal displays have been in preferred use as display components in personal computers and thin-type TVs in recent years, and these thin display panels incorporates many optical films and optical resin plates formed of synthetic resin. Defects such as optical distortion have to be minimized in these optical films and optical resin plates and accordingly, surface protection films are widely used to prevent their surfaces from dirt and flaws during processing and conveyance.

These surface protection films generally consist mainly of a base layer of thermoplastic resin and an adhesive layer adhered over a surface of the former to form a laminated structure. When they are used, the adhesive layer serves for the film to be adhered to the adherend surface, while it is peeled and removed when become unnecessary, and accordingly, it should have a moderate adhesiveness to stick to an adherend surface, should be easily peeled off for removal, and should not contaminate the adherend surface.

These surface protection films are generally wound up into rolls, but in the wound film, the base layer and the adhesive layer are pressed against each other by a relatively high adhesion strength, leading to problems such as easy blocking of the film wound on itself and difficulty in smooth winding-off of the surface protection film when using it. In particular, significant problems tend to take place with diffusion plates/films, prism sheets, and other adherends that have rough surfaces and accordingly require good adhesive properties.

To solve these problems, releasing treatment is generally performed for the layer opposite to the adhesive layer (the opposite layer is hereinafter referred to as back layer) with the aim of decreasing the force required to wind off the surface protection film (hereinafter referred to as unwinding force). For such releasing treatment, the technique of applying a releasing agent over the back layer used to be performed conventionally, but it was difficult to maintain a releasing agent adhered firmly to a back layer while allowing it to be removed smoothly from the adhesive layer. Conventional solutions to this problem include base coating with a special releasing agent and corona treatment carried out before applying a releasing agent over the back layer. Such releasing treatment, however, have problems such as necessity of troublesome coating steps, decrease in yield, and increase in required cost.

On the other hand, there is a proposal of a work-environment-friendly technique in which a base layer and an adhesive layer are formed simultaneously by co-extrusion into a laminated structure in order to eliminating the use of a solvent in producing an adhesive layer while maintaining good contact between the base layer and the adhesive layer (Patent document 1).

However, although some releasing treatment for the back surface of the base layer is necessary even in this co-extrusion method, it is impossible to perform releasing treatment in advance, and accordingly, there are restrictions on the timing of the treatment. To solve this problem, there is a proposal of a technique in which the back surface of the base layer of the layered product resulting from co-extrusion is subjected to friction treatment using a roll or cloth (Patent document 2). However, such friction treatment tends to vary in effect depending on the composition of the base layer and fail in reducing the unwinding force appropriately or lead to damage to the base material surface caused by friction, possibly resulting in foreign objects being caught on the film to cause film defects.

To solve this problem, there is a proposal of a technique in which a resin layer (back layer) produced by adding or blending silicone-based fine particles to an olefin-based resin is combined directly or indirectly with an adhesive layer into a laminated structure (Patent document 3). With this technique, however, the adhesiveness of the adhesive layer works to allow part of the silicone-based fine particles to be caught on the adhesive layer, leading to problems such as contamination of the adherend and a decrease in adhesion strength.

In this regard, there have been many proposals including the above mentioned patent document concerning the method of forming a base layer and an adhesive layer simultaneously by co-extrusion into a laminated structure. In particular, there are proposals of laminated films produced by random copolymerization of styrene and a diene based hydrocarbon to form an adhesive layer that has moderate adhesiveness for sticking to an adherend surface, can be peeled off easily when it is removed, and furthermore, does not contaminate the adherend surface (Patent documents 4 and 5). It is still impossible, however, to avoid the above mentioned problem of unwinding difficulty caused by blocking that takes place during winding off of the film, which still remains unsolved as in the above mentioned cases.

To solve these conventional technical problems, the present applicants have proposed to use an adhesive layer and a back layer both having a rough surface (Patent document 6), but this technique fails in achieving adequate effects in some cases where a still larger adhesion strength is necessary.

The use of a back layer formed of a fluorine-based resin or silicone-based resin combined with a polyolefin has also been proposed (Patent document 7), but not only it is impossible to achieve an adequate effect by simply using a fluorine-based resin, but also the adhesive layer and the back layer may suffer blocking in some cases where, for example, the film is stored at high temperatures.

### Prior art documents

### Patent documents

Patent document 1: Japanese Unexamined Patent Publication (Kokai) No. SHO 61-103975
Patent document 2: Japanese Unexamined Patent Publication (Kokai) No. HEI 2-252777
Patent document 3: Japanese Unexamined Patent Publication (Kokai) No. 2000-345125
Patent document 4: Japanese Unexamined Patent Publication (Kokai) No. HEI 7-241960
Patent document 5: Japanese Unexamined Patent Publication (Kokai) No. HEI 10-176145
Patent document 6: Japanese Unexamined Patent Publication (Kokai) No. 2007-253435
Patent document 7: Japanese Unexamined Patent Publication (Kokai) No. 2008-81589 Summary of the invention

### Problems to be solved by the invention

The present invention is intended to provide a surface protection film that solves the above problems, has moderate adhesive properties for adherend bodies with a rough surface, such as diffusion plates/films and prism sheets, has a rear surface with good slipping properties, and also has blocking resistance and good unwinding properties (decreased unwinding force to enable easy, high-speed sticking of the film to an adherend without causing creases or flaws).

### Means of solving the problems

The present invention adopts the following means to solve these problems.
Specifically, the surface protection film according to the present invention includes a laminated structure formed at least of an adhesive layer and a back layer, wherein the adhesive layer is formed mainly of a styrene-based elastomer while the back layer is formed mainly of a propylene-based resin containing 0.5 wt% to 10 wt% of a fluorine-containing compound having a polyfluorohydrocarbon group and a polyoxy ethylene group, the back layer having a surface roughness of 3 µm or more in terms of ten-point average roughness (Rz), an initial adhesion strength of 1 N/25 mm or more to a #320 hair-line-finished SUS 304 plate, and an unwinding force of 0.5 N/25 mm or less for winding off a film wound up in a roll.

Furthermore, the surface protection film according to the present invention is preferably characterized in that the adhesive layer includes more than 50 wt% to 94 wt% of a styrene-based elastomer, 5 wt% to 49 wt% of an ethylene-α-olefin copolymer, and 1 wt% to 15 wt% of a tackifier.

It is furthermore preferable that the back layer is at least formed of a propylene-based resin containing 0.1 wt% to 10 wt% of inorganic particles with an average particle diameter of 1 to 20 µm.

In a preferred embodiment, furthermore, an interlayer formed mainly of a polyolefin resin exists between the adhesive layer and the back layer.

### Effect of the invention

The present invention is intended to provide with a high reproducibility a surface protection film that solves the above problems, has moderate adhesive properties for adherend bodies with a rough surface, such as prism sheets and diffusion plates/films used in liquid crystal displays in particular, has a rear surface with good slipping properties, has blocking resistance and good unwinding properties (decreased unwinding tensile force to enable easy, high-speed sticking of the film to an adherend without causing creases or flaws), and suffers from no defects such as lifting and peeling from an adherend during high-temperature processing and storage after sticking to an adherend.

### Description of embodiments

The present invention will be described more in detail below.

For the present invention, intensive studies have been performed on the above mentioned objective of providing a surface protection film that has moderate adhesive properties for adherend bodies with a rough surface, has a rear surface with good slipping properties, and also has blocking resistance and good unwinding properties (decreased unwinding force to enable easy, high-speed sticking of the film to an adherend without causing creases or flaws), and found that the above problem is solved completely by a laminate formed of an adhesive layer of a specific resin composition and a back layer of a specific resin composition wherein the back layer contains a specific fluorine-containing compound and has a rough surface.

First, the adhesive layer according to the present invention meets the requirements described below.

With respect to the styrene-based elastomer to be used as the main component of the adhesive layer according to the present invention, it is preferable to use one or more styrene-based elastomers selected from the group consisting of a block copolymer of a styrene-based polymer block and an olefin-based polymer block; a block copolymer of a styrene-based polymer block and a random copolymer block of a styrene-based monomer and an olefin-based monomer; a random copolymer of styrene and an olefin; and a hydrogenated product thereof. If the styrene-based elastomer to be used has an olefin-derived unsaturated double bond, this unsaturated double bond is preferably hydrogenated as required to increase the heat resistance.

In particular, it is preferable to use a block copolymer of a styrene-based polymer block and a random copolymer block of a styrene-based monomer and an olefin-based monomer, or a random copolymer of styrene and an olefin, and it is also preferable that the styrene content is 5 to 30 wt% while the butadiene content is 95 to 70 wt%.

A styrene-based elastomer to be used preferably has a weight average molecular weight of about 100,000 to 600,000, more preferably about 200,000 to 500,000.

If the styrene content is larger, it will be impossible to achieve a required adhesiveness to an adherend, whereas if it is smaller, the adhesive layer will lack required cohesion and leave residues after being peeled off, possibly resulting in contamination of the adherend. Accordingly, it is preferably in the range of 5 to 30 wt%, more preferably in the range of 8 to 20 wt%.

On the contrary, if the butadiene content is larger than above, the adhesive layer will lack required cohesion and leave residues after being peeled off, possibly resulting in contamination of the adherend, whereas if it is smaller, it will be impossible to achieve a required adhesiveness to an adherend. Accordingly, it is preferably in the range of 95 to 70 wt%, more preferably in the range of 92 to 80 wt%.

The styrene-based elastomer preferably has a MFR in the range of 1 to 20 g/10min at 230°C, and more preferably has a MFR in the range of 5 to 15 g/10min to prevent uneven thickness and streaks from being caused as it is mixed and melt-extruded with an ethylene-α-olefin copolymer as described later.

The above adhesive layer contains a styrene-based elastomer as listed above as primary component, and here, it is preferable that the styrene-based elastomer component preferably accounts for more than 50 wt% to 94 wt% of the components constituting the adhesive layer. It is particularly preferable that the styrene-based elastomer component accounts for 55 to 85 wt%.

With respect to the components other than the aforementioned styrene-based elastomer component, it is necessary for the adhesive layer to contain an ethylene-α-olefin copolymer, a so-called linear low density polyethylene, and a tackifier in order to ensure an optimum adhesion relative to the surface roughness of the adherend surface.

Examples of α-olefin to serve as the comonomer that constitutes the ethylene-α-olefin copolymer include butene-1, hexene-1, 4-methyl pentene-1, and octene-1, and in particular, hexene-copolymerized polyethylene is preferable.

Furthermore, the ethylene-α-olefin copolymer preferably has a MFR in the range of 3 to 30 g/10min at 190°C. The MFR is more preferably in the range of 5 to 20 g/10min, and the MFR is still more preferably 10 to 20 g/10min. It is particularly preferable for the ethylene-α-olefin copolymer to have a MFR in the range of 10 to 20 g/10min and to have a MFR larger than that of styrene-based elastomer, though possibly at a different MFR measuring temperature, because defects such as uneven thickness and streaks will not take place significantly when it is mixed and melt-extruded the styrene-based elastomer component.

Furthermore, the ethylene-α-olefin copolymer preferably has a density in the range of 0.87 to 0.935 g/cm³ from the viewpoint of adhesive properties. In particular, it is more preferably in the range of 0.91 to 0.93 g/cm³ from the viewpoint of temperature dependence of adhesion.

Here, the ethylene-α-olefin copolymer preferably accounts for 5 wt% to 49 wt% of the adhesive layer. If the content of the ethylene-α-olefin copolymer is higher than above, the layer will fail to achieve an adequate contact and required adhesion in the case where the adherend is, for example, a prism sheet with high surface roughness. If it is lower, on the other hand, blocking between the films will easily take place, resulting in inferior unwinding characteristics. In this respect, the ethylene-α-olefin copolymer preferably accounts for 20 wt% to 40 wt% of the adhesive layer.

Examples of the tackifier, which is one of the integral components that constitute the adhesive layer, include polyterpene with a glass transition temperature of 30 to 100°C and a softening temperature of 30 to 150°C. The structural units of polyterpene include α-pinene, β-pinene, and dipentene, and hydrogenated products (hydrogenated terpene resin) may also be used. Usable modified products include terpene styrene resin and terpene phenol resin. Usable rosins include rosin, polymerized rosin, hydrogenated rosin, and modified rosin, and usable derivatives include glycerin esters and pentaerythritol esters of rosin or hydrogenated rosin. In particular, terpene phenol resin is preferable from the viewpoint of uniform mixing with a styrene-based elastomer.

Here, it is preferable that the tackifier accounts for 1 wt% to 15 wt% of the adhesive layer. If its content is less than 1 wt%, the layer tends to undergo lifting over time after being sticked to a prism sheet or the like (possibly peeled partially due to poor contact with the adherend, i.e., prism sheet). If its content is more than 15 wt%, on the other hand, it may contaminate the adherend or undergo an unfavorable increase in adhesion (rise in adhesion) after being sticked with an adherend and then stored at a high temperature of 50°C or more.

An adhesive layer including such three components will have an appropriate degree of adhesiveness to prism sheets for liquid crystal displays or other optical films with rough surface. As a common index to represent adhesion, such a layer can have an initial adhesion strength of 1 N/25mm or more to a #320 hair-line-finished SUS304 plate (having a surface roughness equivalent to an arithmetic average roughness (Ra) of 0.3 µm and a ten-point average roughness (Rz) of 3.6 µm).

In the next place, the back layer according to the present invention meets the requirements described below.

The back layer according to the present invention is formed mainly of a propylene-based resin containing 0.5 wt% to 10 wt% of a fluorine-containing compound that includes both a polyfluorohydrocarbon group and a polyoxyethylene group. Preferable examples of such a propylene-based resin include homopolypropylenes and copolymers with ethylene and/or an α-olefin. If the propylene based-resin to be used is a copolymer with ethylene and/or an α-olefin, an increase in the comonomer content serves to lower the melting point of the copolymer to permit easy co-extrusion and low-temperature extrusion, and accordingly, the comonomer content is more preferably in the range of 3 to 7 wt%. Here, if a heat-resistant back layer is required, the comonomer content may be decreased to ensure a desired degree of heat resistance.

The propylene-based resin, furthermore, preferably has a MFR of 3 to 40 g/10min at 230°C. In particular, a propylene-based resin with a MFR in the range of 5 to 30 g/10min is more preferable because such a resin can be extruded at a low temperature and serves in combination with a low density polyethylene as described later to produce a back layer with a rough surface easily.

The back layer is formed mainly of a propylene-based resin containing 0.5 wt% to 10 wt% of a fluorine compound that includes a polyfluorohydrocarbon group and a polyoxyethylene group, and such a fluorine compound including a polyfluorohydrocarbon group and a polyoxyethylene group, may be based on, as monomer (a), for example, a (meth)acrylate having a perfluoroalkyl group with carbon number of 1 to 18, and can be produced by copolymerizing it with, for example, a (meth)acrylate containing a polyoxyethylene group used as monomer (b) or (c) as described later.

A perfluoroalkyl group to be used as aforementioned monomer (a) preferably has a carbon number of 1 to 18, more preferably 1 to 6. Such a perfluoroalkyl group may be in either a straight-chain or a branched form. Such groups may be used singly or as a combination of two or more of them.

Such a (meth)acrylate containing a perfluoroalkyl group is commercially available from Kyoeisha Chemical Co., Ltd., but can be synthesized by a known method from a commercially available fluorine-containing compound used as feedstock.

Such a monomer (b) containing a polyoxyethylene group preferably has a structure having 1 to 30, more preferably 1 to 20, oxyethylene units (-CH₂-CH₂-O-) connected directly to each other. Here, the chain may contain oxypropylene units (-CH₂-CH(CH₃)-O-). Preferable examples include polyethylene glycol monomethacrylate with eight oxyethylene units. Such examples of monomer (b) may be used singly, or two or more may be used in combination.

Another monomer containing a polyoxyethylene group, which is referred to as monomer (c), may be a di(meth)acrylate of a structure having 1 to 30 oxyethylene units directly connected with each other and having a double bond at both terminals, and a preferable example is a polyethylene glycol dimethacrylate having eight such units. Such monomers (c) may also be used singly, or two or more may be used in combination.

With respect to the contents of such monomers (a), (b), and (c), it is preferable that monomer (a) accounts for 1 to 80 wt%, monomer (b) accounting for 1 to 80 wt%, and monomer (c) accounting for 1 to 50 wt%.

Note that the above-mentioned fluorine-containing compounds having a polyfluorohydrocarbon group and a polyoxyethylene group may be copolymerized, in addition to the above-mentioned three monomers, with another monomer copolymerizable with them to a content of less than 50 wt%. Examples of such a monomer include methylene, vinyl acetate, vinyl chloride, vinyl fluoride, halogenated vinyl, styrene, methyl styrene, (meth)acrylic acid/esters thereof, (meth)acrylamide monomers, and (meth)allyl monomers.

Polymerization methods that can be used to produce the aforementioned fluorine-containing compound having a polyfluorohydrocarbon group and a polyoxyethylene group from the aforementioned monomers include bulk polymerization, solution polymerization, suspension polymerization, and emulsion polymerization, and in addition to thermal polymerization, other methods such as photopolymerization and energy ray polymerization may be adopted.

Usable polymerization initiators include conventional organic azo compounds, peroxides, and persulfates.

A fluorine-containing compound to be used for the present invention preferably has a molecular weight of 1,000 to 100,000, more preferably 5,000 to 20,000. The molecular weight may be adjusted by adding a polymerization chain transfer agent such as thiol, mercaptan, and α-methyl styrene.

Here, it is preferable that the fluorine-containing compound accounts for 0.5 wt% to 10 wt% of the back layer according to the present invention. Blocking with the adhesive layer tends to occur, making it difficult to ensure a desired unwinding force, if its content is less than 0.5 wt%. If its content is increased to 10 wt% or more, it will not mix with the resin uniformly because of low solubility in the resin, and in addition, the fluorine-containing compound can have influence during melt-extrusion on the propylene-based resin used to form a back layer, leading to slippage on extruder screws and difficulty in uniform discharge.
Here, it is preferable that in addition to the fluorine-containing compound, the back layer according to the present invention simultaneously contain 0.1 wt% to 10 wt% of inorganic particles with an average particle diameter of 1 to 20 µm. It is particularly preferable that such inorganic particles have a relatively large average particle diameter of 3 to 15 µm from the viewpoint of slipping properties and blocking prevention.

Materials of such inorganic particles include calcium carbonate, magnesium carbonate, titanium oxide, clay, talc, magnesium hydroxide, aluminum hydroxide, and zeolite, as well as silica, of which silica is preferable.

The synergy effect of the fluorine-containing compound, inorganic particles, and the surface roughness of a back layer as described later works to suppress blocking and easily achieve a desired unwinding force of 0.5 N/25mm or less.

The back layer according to the present invention preferably has a surface roughness of 3 µm or more in terms of ten-point average roughness (Rz). If Rz is less than 3 µm, the resulting protection film will suffer from creases when wound up into a roll during its production process, resulting in quality degradation. Such surface roughness can be created by, for example, adding a small amount of an ethylene-based resin that is poor in compatibility to the propylene-based resin used as main component.

The laminated structure referred to for the present invention is as described below.

The surface protection film according to the present invention has a laminated structure at least including an adhesive layer and a back layer as described above. Here, it may be a two-layer laminated film of the adhesive layer and the back layer, and in that case, the back layer may be called base layer. In a more preferred embodiment, an interlayer formed mainly of a polyolefin resin exists between the adhesive layer and the back layer.

Examples of the polyolefin resin that constitutes the interlayer as a main component include, for instance, low density polyethylene, medium density polyethylene, high density polyethylene, linear low density polyethylene, low-crystallinity or amorphous ethylene-α-olefin copolymer, polypropylene, propylene-ethylene copolymer (random copolymer and/or block copolymer), propylene-α-olefin copolymer, ethylene-ethyl (meth)acrylate copolymer, ethylene-methyl (meth)acrylate copolymer, ethylene-n-butyl (meth)acrylate copolymer, and ethylene-vinyl acetate copolymer. These may be used singly or in combination.

Here, there are no specific limitations on the type of α-olefin as long as it can be copolymerized with propylene and ethylene, and examples include, for instance, butene-1, hexene-1, 4-methyl pentene-1, octene-1, pentene-1, and heptene-1. In particular, preferable examples include propylene-based resins such as polypropylene, propylene-ethylene copolymer (random copolymer and/or block copolymer), and propylene-α-olefin copolymer, because high rigidity can be achieved.

For the surface protection film according to the present invention, the interlayer may be produced by adding and mixing the polyolefin resin to the resin used to constitute the adhesive layer and/or the resin used to constitute the back layer. In this case, it is preferable that the total content of the constituent resins that are added or mixed in is less than 40 wt%. In general, when a film is produced by co-melt-extrusion, edge portions with ununiform thickness are cut off and removed in, for instance, a slitting step, but use of these portions as material for the interlayer is a preferable practice because the feedstock consumption can be reduced.

Here, a filler, lubricant, antioxidant, ultraviolet absorber, pigment, antistatic agent, and nucleating agent, namely, talc, stearate amide, calcium stearate, and the like may be added appropriately to the interlayer as long as they do not decline its physical properties. These may be added singly, or two or more may be used in combination.

The back surface may be processed by, for example, embossing, coloring with pigments, or corona treatment, or may be printed as required.

Described next is the production method for the surface protection film according to the present invention.

There are no specific limitations on the production method to be used for the surface protection film according to the present invention, and usable processes include: melt-extruding separately from different extruders, a mixed resin composition to constitute a back layer resin, including 60 to 95.4 wt% of a propylene-based resin, 0.5 wt% to 10 wt% of a fluorine-containing compound having both a polyfluorohydrocarbon group and a polyoxyethylene group, 0.1 wt% to 10 wt% of inorganic particles, namely silica, with a particle diameter of 1 to 20 µm, and 4 wt% to 20 wt% of an ethylene-based resin, namely low density polyethylene, with a relatively high viscosity, a mixed resin composition to constitute an adhesive layer resin, including more than 50 wt% to 94 wt% of a styrene-based elastomer, namely, a hydrogenated styrene butadiene random copolymer, 5 wt% to 49 wt% of an ethylene-α-olefin copolymer, and 1 wt% to 15 wt% of a tackifier, and, preferably, a resin composition to constitute an interlayer resin, including a polyolefin resin as mainly component, which are combined into an integrated layered structure in the die through a so-called three-layer co-extrusion step to produce a molded laminate product containing a back layer, an interlayer, and an adhesive layer, followed by winding it up into a roll of a surface protection film; and melt-extruding separately a back layer, an interlayer, an adhesive layer as mentioned above and then combining the adhesive layer with the back layer and/or the interlayer by the lamination method to form an integrated layered structure.

Here, it is preferable that the tackifier is mixed uniformly in advance with the styrene-based elastomer and/or ethylene-α-olefin copolymer to prepare a pelletized master batch, which allows a uniform adhesive layer to be formed easily when melt-extruding the adhesive layer resin.

Generally known methods such as blow-extrusion and T-die extrusion may be used for the so-called three-layer co-extrusion, while dry lamination, T-die melt-extrusion, or T-die extrusion coating may be used for the integrated laminate production, and in particular, T-die hot-melt-co-extrusion is preferable from the viewpoint of achieving high thickness accuracy, surface profile control, high quality, and low cost.

Depending on the adherend's thickness and the adherend's required quality level, the surface protection film according to the present invention normally has a thickness in the range of 20 to 100 µm from the viewpoint of moldability and handleability.

Here, the adhesive layer, interlayer, and back layer may each have an appropriately selected thickness based on the required levels as described above, but for example, a two-layered laminated film normally has a back layer thickness of about 16 to 90 µm and an adhesive layer thickness of about 4 to 10 µm. A three-layered laminate film according to a preferred embodiment has a back layer thickness of 2 to 10 µm, interlayer thickness of 14 to 80 µm, and adhesive layer thickness of 4 to 10 µm. Examples

The present invention will now be illustrated with reference to Examples, but it should be understood that the invention is not construed as being limited thereto. Note that for Examples and Comparative examples, "parts" and "percent (%)" are in terms of mass unless otherwise specified. The methods used for measurement and evaluation for various physical properties are as described below.

### (1) Stcking of specimen

Each specimen for Example and Comparative example was stored and adjusted for 24 hours under the conditions of a temperature of 23°C and a relative humidity of 50%, and sticked to an adherend, which is either a #320 hair-line-finished SUS304 plate with a thickness of 2 mm, supplied by Watanabe Giichi Seisakusho Co., Ltd., or a prism sheet with a thickness of 160 µm and a surface roughness (Rz) of 27 µm, using a roll press (special pressure-sticking roller, supplied by Yasuda Seiki Seisakusho Ltd.) at a sticking speed of 300 cm/min under a sticking pressure of 1.0 MPa for the SUS304 plate or a low pressure of 0.35 MPa for the prism sheet, which is intended to prevent the prism tips from being damaged. Subsequently, the specimen was stored for 24 hours under the conditions of a temperature of 23°C and a relative humidity of 50% and then subjected to various measurements and evaluations.

### (2) Adhesion strength

A tensile tester (Tensilon universal tester, supplied by Orientec Co., Ltd.) was used to measure the adhesion strength under the conditions of a tension speed of 300 mm/min and a peeling angle of 180°.

For evaluation the degree of adhesion strength increase during high temperature storage, the specimen sticked to a prism sheet was stored for a week at a 50°C in a hot air drier and further stored for 24 hours in an atmosphere of a temperature of 23°C and a relative humidity of 50%, followed by measuring its adhesion strength by the same method as above.

### (3) Staining properties

After storage for a specified period at a temperature 23°C or 50°C, the stain on the prism sheet used as adherend or on the SUS304 plate used as adherend was visually observed and evaluated as follows.

A: No stain found
B: Stain found in a few portions
C: Significant stain found

### (4) Unwinding force

A film, wound up in a roll, was stored for 24 hours at 23°C and a relative humidity of 50%RH, and then the tenth and eleventh layers from the surface of the roll were taken, followed by sampling two-layered specimens at three positions aligned in the width direction. Each specimen has a width of 25 mm and a length of 100 mm or more.At each end of a specimen, the two layers were peeled slightly (but enough for holding by a chuck) by hand, and the specimen was fixed in a tensile tester (Tensilon universal tester, supplied by Orientec Co., Ltd.) with each end held by a chuck. As the layers were peeled at a rate of 200 mm/min, the peeling force was measured at three positions aligned in the width direction, followed by calculating their average to represent the unwinding force.

### (5) Surface roughness

For surface roughness, a high accuracy fine geometry measurement device (Surfcorder ET4000A, supplied by Kosaka Laboratory Ltd.) was used according to JIS B0601-1994 to make 21 measurements on 2 mm length in the transverse direction and at 10 µm intervals in the length direction (machine direction), followed by carrying out three-dimensional analysis to determine the arithmetic average roughness (Ra) and ten-point average roughness (Rz) (in µm). Here, the measuring conditions included use of a diamond needle with a stylus tip radius of 2.0 µm, a measuring force of 100 µN, and a cut-off of 0.8 mm.

### (Example 1)

The constituent resins for each layer were prepared as follows.

Resin for adhesive layer: A resin composition consisting of 60 wt% of a styrene-butadiene random copolymer containing 10 wt% of a styrene component and having a MFR of 10 g/10min at 230°C, which acted as styrene-based elastomer, 20 wt% of hexene-copolymerized polyethylene (linear low density polyethylene) having a density of 0.921 g/m³ and a MFR of 5 g/10min at 190°C, which acted as ethylene-α-olefin copolymer, and 20 wt% of a pelletized master batch with 40 wt% hydrogenated terpene phenol, which acted as tackifier, was mixed uniformly in a Henschel mixer.

Here, the pelletized master batch with 40 wt% hydrogenated terpene phenol was prepared from 40 wt% of the hydrogenated terpene phenol and 60 wt% of the hexene copolymerization polyethylene, which were processed by a twin screw extruder to provide a pelletized master batch.

Resin for back layer: 45 wt% of homopolypropylene having a MFR of 5 g/10min at 230°C, 24 wt% of a propylene-ethylene random copolymer (ethylene content 5 wt%) having a MFR of 35 g/10min at 230°C , and 6 wt% of a low density polyethylene having a MFR of 2 g/10min at 190°C and a density of 0.92 g/cm³ were combined with 25 wt% of a master batch, which was a mixture composition of 90 wt% of the aforementioned homopolypropylene, 4 wt% of silica with an average particle diameter of 11µ, and 6 wt% of a fluorine-containing compound having a polyfluorohydrocarbon group and a polyoxyethylene group, and mixed uniformly in a Henschel mixer.

Here, the fluorine-containing compound having a polyfluorohydrocarbon group and a polyoxyethylene group was produced from 25 wt% of a perfluoroalkyl acrylate of C₆F₁₃ (CH₂=CHCOOC₂H₄C₆F₁₃), which was used as monomer (a), 50 wt% of a polyethylene glycol monoacrylate with eight oxyethylene repeating units {CH₂=CHCOO(CH₂CH₂O) ₈H}, which was used as monomer (b), and 25 wt% of a polyethylene glycol dimethacrylate with eight oxyethylene repeating units {CH₂=C(CH₃)COO(CH₂CH₂O)₈COC(CH₃)=CH₂}, which was used as monomer (c). Using trifluorotoluene as solvent, 2,2'-azo-bis(2,4-dimethylvaleronitrile) as polymerization initiator, and lauryl mercaptan as chain transfer agent, they were subjected to polymerization in a nitrogen gas flow at 60°C for 5 hours while stirring, followed by precipitation in methanol, filtration, and drying under reduced pressure.

Resin for interlayer: The same homopolypropylene as used for the back layer was used.

The resins for each layer prepared above were used and also a multimanifold type T-die composite film production machine with a die lip width(or size) of 2,400 mm having three extruders each with a diameter of 90 mm (for adhesive layer), a diameter of 65 mm (for back layer), and a diameter of 115 mm (for interlayer) was used. The resin compositions prepared above were fed to respective extruders while the discharge rate of each extruder was adjusted so that the adhesive layer thickness ratio, the back layer thickness ratio, and the interlayer thickness ratio would be 12.5%, 8.5%, and 79%, respectively. They were extruded through the composite T-die at an extrusion temperature of 200°C to produce a three-layered laminate film with a film thickness of 40 µm, which was wound up in a roll.

Then, the film wound up in a roll was fed to a slitting machine to provide a film sample wound up in a roll with a width of 1,400 mm and a length of 2,000 m for Example 1.

When producing this film of Example 1, the film was sent (wound off) smoothly and easily to the slitting machine for slitting to a predetermined width, and no blocking was found. Blocking would cause a significant scrunching sound when the adhesive layer is peeled off from the back layer, but there was no such sound, demonstrating that the film was wound off very smoothly.

For evaluation of the characteristics the resulting film of Example 1, it was stored for 24 hours at 23°C and a relative humidity of 50%RH and then wound back to cut out specimens. Here again, no blocking was found, and the film was wound back smoothly, thus properly providing cut-out specimens.

Subsequently, these specimens were subjected to evaluation of various characteristics, and results are shown in Table 1 along with the resin compositions used to produce each layer.

(Comparative example 1)Except that the back layer consisted of 80 wt% of a propylene-ethylene random copolymer (ethylene content 5 wt%) having a MFR of 30 g/10min at 230°C and 20 wt% of a low density polyethylene having a MFR of 2 g/10min at 190°C and a density of 0.92 g/cm³ the same procedure as in Example 1 was carried out for co-extrusion to produce a laminated film of 40 µm, which was wound up in a roll.

Subsequently, when it was attempted to wind off the wound-up film aiming to feed it to the slitting machine, strong adhesion and blocking were found to take place between the adhesive layer and the back layer in this film for Comparative example. When it was wound off strongly, there was a scrunching sound as the layers were peeled off from each other. Not only part of the adhesive layer resin remained adhered on the back layer, but also the film was elongated due to an excessively strong unwinding tension and could not be wound back at all.
Here, since part of the adhesive layer was caught on the back layer, specimens taken from normal portions were subjected to evaluation of their surface roughness and adhesive properties.
Results are shown in Table 1 along with results from other Examples and Comparative examples.

### (Examples 2 and 3)

A resin composition consisting of 90 wt% of a styrene-butadiene random copolymer containing 10 wt% of a styrene component and having a MFR of 10 g/10min at 230°C, which acts as the adhesive layer resin for Example 2, and 10 wt% of a pelletized master batch produced from 60 wt% of hexene-copolymerized polyethylene (linear low density polyethylene) having a density of 0.91 g/m³ and a MFR of 15 g/10min at 190°C, and 40 wt% of hydrogenated terpene phenol, which acts as tackifier, was mixed uniformly in a Henschel mixer.

Except that the adhesive layer resin used for Example 3 was produced from a resin composition consisting of 75 wt% of a styrene-butadiene random copolymer containing 10 wt% of a styrene component and having a MFR of 10 g/10min at 230°C and 25 wt% of a pelletized master batch with 40 wt% of the same tackifier as used for Example 2, which was mixed uniformly in a Henschel mixer, the same constituent resins as used for Example 1 were used to prepare films for Examples 2 and 3.

In both Examples 2 and 3, the resulting film was slit to a predetermined width by a slitting machine and then wound up to produce a product roll, and specimen films were prepared smoothly in both cases. Characteristics of the resulting films are shown in Table 1.

(Example 4)An adhesive layer resin and interlayer resin of the same constituent resins as in Example 1 were used, while as back layer resin, 20 wt% of homopolypropylene having a MFR of 5 g/10min at 230°C, 24 wt% of a propylene-ethylene random copolymer (ethylene content 5 wt%) having a MFR of 30 g/10min at 230°C , and 6 wt% of a low density polyethylene having a MFR of 2 g/10min at 190°C and a density of 0.92 g/cm³ were combined with 50% of a master batch, which was a mixture composition of 90 wt% of the aforementioned homopolypropylene, 4 wt% of silica with an average particle diameter of 11µ, and 6 wt% of a fluorine-containing compound having a polyfluorohydrocarbon group and a polyoxyethylene group, and mixed uniformly in a Henschel mixer. Except for these, the same procedure as in Example 1 was carried out to provide a sample film. Characteristics of the resulting films are shown in Table 1.

(Example 5)Resin for adhesive layer: 75 wt% of a styrene-ethylene butadiene-styrene triblock copolymer (hydrogenated polymer) containing 15 wt% of a styrene component and having a MFR of 3.5 g/10min at 230°C was combined with 25 wt% of a pelletized master batch with 40 wt% of the same tackifier as used in Example 2, and mixed uniformly in a Henschel mixer.

Resin for back layer: 66 wt% of a propylene-ethylene random copolymer (ethylene content 5 wt%) having a MFR of 35 g/10min at 230°C, 18 wt% of a low density polyethylene having a MFR of 2 g/10min at 190°C and a density of 0.92 g/cm³, 4 wt% of silica with an average particle diameter 5µ, 4 wt% of talc with an average particle diameter 5µ, and 8 wt% of the same fluorine-containing compound having a polyfluorohydrocarbon group and a polyoxyethylene group as used in Example 1 were combined as a master batch. This master batch was used.

Resin for interlayer: A propylene-ethylene random copolymer (ethylene content 4 wt%) having a MFR of 6 g/10min at 230°C was used.

Then, the resins for each layer prepared above were used and also a multimanifold type T-die composite film production machine with a die lip width of 2,400 mm having three extruders each with a diameter of 90 mm (for adhesive layer), a diameter of 65 mm (for back layer), and a diameter of 115 mm (for interlayer) was used. The resin compositions prepared above were fed to respective extruders while the discharge rate of each extruder was adjusted so that the adhesive layer thickness ratio, the back layer thickness ratio, and the interlayer thickness ratio would be 12%, 8%, and 80%, respectively. They were extruded through the composite T-die at an extrusion temperature of 200°C to produce a three-layered laminate film with a film thickness of 45 µm, which was wound up in a roll.

Then, the film wound up in a roll was fed to a slitting machine to provide a film sample wound up in a roll with a width of 1,400 mm and a length of 1,000 m for Example 5.The film was sent (wound off) smoothly and easily to the slitting machine for slitting to a specified width, without causing any sound or blocking when peeled.

(Example 6)An adhesive layer resin and interlayer resin of the same constituent resins as in Example 5 were used, while as back layer resin, 75 wt% of a propylene-ethylene random copolymer (ethylene content 5 wt%) having a MFR of 35 g/10min at 230°C, 15 wt% of a low density polyethylene having a MFR of 2 g/10min at 190°C and a density of 0.92 g/cm³,and 10 wt% of a fluorine-containing compound having a polyfluorohydrocarbon group and a polyoxyethylene group polymerized as follows were combined as a master batch. This master batch was used.

Here, with respect to the fluorine-containing compound, except that 10 wt% of perfluoroalkyl acrylate CH₂=CHCOOC₂H₄C₈F₁₇, which acted as monomer (a), 80 wt% of oxypolyethylene glycol monoacrylate CH₂=CHCOO(CH₂CH₂O)₈H, which acted as monomer (b), and 10 wt% of polyethylene glycol dimethacrylate CH₂=C(CH₃)COO(CH₂CH₂O)₈COC(CH₃)=CH₂, which acted as monomer (c), were used, the same polymerization procedure as in Example 1 was carried out to provide an intended fluorine-containing compound.

Then, the resins for each layer prepared above were used and also a multimanifold type T-die composite film production machine with a die lip width of 2,400 mm having three extruders each with a diameter of 90 mm (for adhesive layer), a diameter of 65 mm (for back layer), and a diameter of 115 mm (for interlayer) was used. The resin compositions prepared above were fed to respective extruders while the discharge rate of each extruder was adjusted so that the adhesive layer thickness ratio, the back layer thickness ratio, and the interlayer thickness ratio would be 12%, 8%, and 80%, respectively. They were extruded through the composite T-die at an extrusion temperature of 200°C to produce a three-layered laminate film with a film thickness of 45 µm, which was wound up in a roll.

Then, the film wound up in a roll was fed to a slitting machine to provide a film sample wound up in a roll with a width of 1,400 mm and a length of 1,000 m for Example 6.The film was sent (wound off) smoothly and easily to the slitting machine for slitting to a predetermined width, without causing any sound or blocking when peeled.

(Comparative examples 2 and 3)As back layer resin, 45 wt% of homopolypropylene having a MFR of 5 g/10min at 230°C, 4 wt% of a propylene-ethylene random copolymer (ethylene content 5 wt%) having a MFR of 30 g/10min at 230°C, and 1 wt% of a low density polyethylene having a MFR of 2 g/10min at 190°C and a density of 0.92 g/cm³ were combined with 50% of a master batch, which was a mixture composition of 90 wt% of the aforementioned homopolypropylene, 4 wt% of silica with an average particle diameter of 11µ, and 6 wt% of a fluorine-containing compound having a polyfluorohydrocarbon group and a polyoxyethylene group, and mixed uniformly in a Henschel mixer. Except for these, the same procedure as in Example 1 was carried out to provide a sample film for Comparative example 2. A significant scrunching sound was caused by peeling of layers when the resulting film was wound off while being cut to a predetermined width in a slitting machine. Characteristics of the resulting films are shown in Table 1.

For Comparative example 3, as back layer resin, 80.3 wt% of a propylene-ethylene random copolymer (ethylene content 5 wt%) having a MFR of 30 g/10min at 230°C, and 19.6 wt% of a low density polyethylene having a MFR of 2 g/10min at 190°C and a density of 0.92 g/cm³ were combined with 0.1 wt% of erucamide as lubricant to produce a mixture composition, and mixed uniformly in a Henschel mixer. Except for these, the same procedure as in Example 1 was carried out to provide a sample film for Comparative example 3. A significant sound was cause by peeling of layers when the resulting film was wound off while being cut to a predetermined width in a slitting machine, but it was possible to produce a product roll. Characteristics of the film are given in Table 1.

However, the film of Comparative example 3 suffered from bleeding-out of the lubricant, resulting in inferior staining properties.

[Table 1]

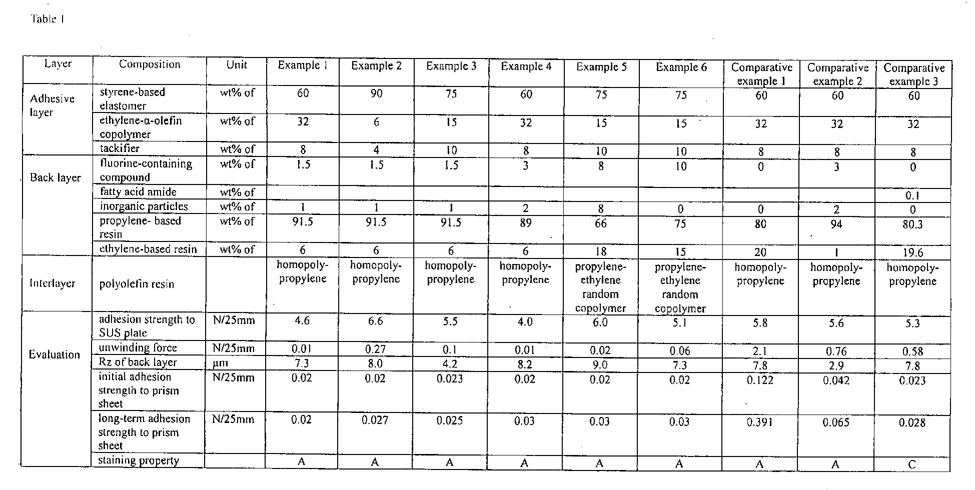

### [Industrial applicability]

The surface protection film according to the present invention can be used favorably as surface protection film not only for preventing contamination and flaws during processing and conveyance of synthetic resin plates, metal plates, coated steel plates, and various nameplates, but also for preventing surface contamination and flaws during processing and conveyance of various synthetic-resin-based optical film and optical-use resin plates widely used in recent years in thin-type displays such as liquid crystal displays.

## Claims

1. A surface protection film comprising a laminated structure formed at least of an adhesive layer and a back layer, wherein the adhesive layer contains a styrene-based elastomer while the back layer is formed mainly of a propylene-based resin containing 0.5 wt% to 10 wt% of a fluorine-containing compound having a polyfluorohydrocarbon group and a polyoxyethylene group, the back layer having a surface roughness of 3 µm or more in terms of ten-point average roughness (Rz), an initial adhesion strength of 1 N/25 mm or more to a #320 hair-line-finished SUS 304 plate, and an unwinding force of 0.5 N/25 mm or less for winding off a film once wound up in a roll.

2. A surface protection film as defined in claim 1 wherein the adhesive layer includes more than 50 wt% to 94 wt% of a styrene-based elastomer, 5 wt% to 49 wt% of an ethylene-α-olefin copolymer, and 1 wt% to 15 wt% of a tackifier.

3. A surface protection film as defined in either claim 1 or 2 wherein the back layer contains 0.1 wt% to 10 wt% of inorganic particles with an average particle diameter 1 to 20 µm.

4. A surface protection film as defined in any of claims 1 to 3 wherein an interlayer of polyolefin resin exists between the adhesive layer and the back layer.
